# EUROPEAN PATENT SPECIFICATION

(11) **EP 0 585 635 B1**
(45) Date of publication and mention of the grant of the patent: **28.05.1997**
(21) Application number: 93112409.3
(22) Date of filing: 03.08.1993
(51) Int. Cl.: E04F 13/08, F16B 35/00

(54) **A system for attaching panels onto a wall of a building**
System zum Befestigen von Panelen an einer Gebäudewand
Système pour attacher des panneaux sur un mur d'un bâtiment

(30) Priority: 01.09.1992 ID 4658
(43) Date of publication of application: 09.03.1994
(73) Proprietor: Tejean, Biantoro, Jakarta Selatan (ID)
(72) Inventor: Tejean, Biantoro, Jakarta Selatan (ID)
(74) Representative: Goetz, Rupert, Dipl.-Ing.

(56) References cited:
- DE-A- 2 337 163
- DE-C- 614 656

## Description

The present invention relates to a cladding system according to the preamble of claim 1. The present invention particularly relates to a system for attaching stone panels such as granite panels onto the walls of high rise buildings.

### BACKGROUND OF THE INVENTION

Granite is one of the stone materials used as an alternative for a decorative surface layer on walls, floors, and ceilings of buildings, especially for the surfaces of exterior walls, where it is used as cladding on the exterior surfaces of monumental buildings. In addition, methods for this cladding have been developed and have become potential alternatives, as these methods can be applied for exterior surfaces of high rise buildings known as curtain walls. An example of a method for granite panel attachment is the use of the unitized granite curtain wall.

The generally known methods for attaching granite panels are not cost competitive, and even tend to be very expensive. Furthermore, these methods require the use of relatively difficult installation procedures. The limitations on the size of the granite panels that may be supported by known attachment systems also result in severe constraints regarding the possibilities of designers and architects.

Blocks of granite used to be excavated by means of conventional drilling and the use of explosives. However, with the development of technology, granite can now be excavated using the flexible diamond wire cut system, thus achieving a more regular and precise form and a larger size suitable for meeting the need for larger sized panels.

The problem of load limitation is a paradoxical matter. On one hand, granite excavation technology has developed to the point where large sized blocks can be produced, and similarly it is also possible to produce large panels. In contrast, an adequate system has not been found yet with respect to the attachment of granite panels to the walls of high rise buildings. Therefore, the panels that are produced must be cut into smaller sizes to enable attachment by the anchorage systems which so far have only been able to accommodate small sized panels.

The attachment of granite panels onto a wall or even a ceiling is usually performed by providing holes along the edges of each granite panel and inserting a pin or bolt into each hole. These pins or bolts are then fastened to the wall of the building by means of a brass or stainless steel wire or by means of steel bars or angles which are connected to bolts fastened to the wall itself. The making of the holes is often combined with a groove along the edge of the granite panel.

One known system for attaching stone or concrete panels onto a wall employs angled bolts, the one end thereof being fastened to a supporting structure and extending away from the panel perpendicular to the side of the panel facing the supporting structure while the other end thereof extends into a sloping hole provided in the panel, i.e. a hole extending into the panel at an angle of about 45° with respect to the panel surface facing the supporting structure. The supporting structure may e.g. be a steel substructure which is fixed to the wall. With this system the edges of the sloping holes are easily damaged in the course of installing the angled bolts and fixing them to the supporting structures. Moreover, this conventional system does not result in a tight and rigid contact between the angled bolts and the inner surface of the sloping holes thus requiring an epoxy adhesive in the sloping hole to obtain secure attachment. When this system is used for attaching precast concrete panels, reinforcement means such as reinforcement bars have to be provided within the concrete, i.e. before casting the panels, so that the sloping holes are able to withstand the forces exerted on them by the angled bolts when the panel is attached to a wall.

It is an object of the present invention to provide a system permitting the attachment of large sized granite panels to the walls of high rise buildings.

### SUMMARY OF THE INVENTION

To this end a system as defined in the preamble of claim 1 is provided, wherein every hole into which the other end of a bolt extends is perpendicular to the side of the panel facing the wall, and wherein every one end of the bolts is fastened to the supporting structures by means of a nut and a wedge-shaped washer.

In principle this invention takes advantages of the strength of stone materials, especially granite material, which are able to withstand considerable pressure due to their good compression strength, while conventional methods did not take effective and optimum advantage of these superior properties.

The basic concept is to obtain a strong shearing force between a bolt and the panel in order to provide adequate supporting force for attaching the panels to a steel or concrete structure of a building.

With this invention, it is possible to attach large sized granite panels to the exterior walls of high rise buildings in an economic and strongly adhering manner. Sliding of the panels to the sides is prevented due to the existence of the shearing and friction forces provided by angled bolts extending into holes perpendicular to the panel surface and wedge-shaped washers of particular shape. Compared to conventional systems, the forces needed to support a panel of a given size are more evenly distributed across its surface.

### DETAILED DESCRIPTION OF THE PREFERRED EMBODIMENT

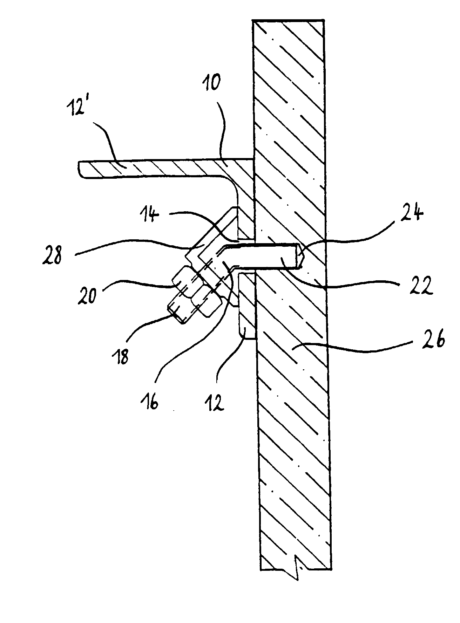

The only drawing shows an exemplary section of the system according to the present invention partly in cross-section.

A supporting structure in the form of a metal bracket 10 having legs 12, 12' defining an L-shaped cross-section is fixedly mounted to a wall of a building in a conventional manner (not shown). The metal bracket 10 is preferably made of steel or aluminum. The legs 12, 12' of the metal bracket 10 may be of equal length. The leg 12 extending essentially parallel to the wall of the building is provided with a plurality of openings 14, one of which is shown.

Through each opening 14 passes a bolt 16 having two linear portions, the angle between the two linear portions being in the range of 145° to 149°. One end 18 of the bolt 16 is threaded for fitting a nut 20 and its other end 22 extends into a hole 24 provided in a granite panel 26. The other end 22 of the bolt 16 may be unthreaded or roughened in order to improve friction between the bolt 16 and the surface of the hole 24. The two linear portions of the bolt 16 may have unequal lengths.

The holes 24 are drilled perpendicular to the rear surface of the granite panel 26, i.e. to the surface facing the wall of the building and range from 6 mm to 12 mm in diameter and from 15 mm to 25 mm in depth. The number of holes 24 is determined according to the size and the weight of the granite panel 26.

Between the nut 20 and the metal bracket 10 a wedge-shaped washer 28 is arranged on each bolt 16. The washer 28 is preferably made of aluminum and has a V- or L-shaped cross-section (see fig.). The angle enclosed by the V- or L-shape of the washer 28 is preferably 90°.

Due to the arrangement of an angled bolt in combination with the above-described wedge-shaped washer 28, the bolt 16, when the nut 20 is tightened, is drawn in such a fashion that its other end 22 exerts pressure against the side of the hole 24 and thus creates friction and shearing forces which firmly hold the granite panel 26 attached to the metal bracket 10. The sum of all friction and shearing forces created by the plurality of bolts 16 holding a granite panel 26 constitutes the supporting force of the attachment system according to the present invention.

When panels of lesser strength, i.e. panels made of materials not having a good compression strength, are to be attached to a wall using the system according to the present invention it is preferred to provide some sort of interface material between the bolt 16 and the surface of the hole 24 to avoid direct contact and to obtain a better distribution of the compression load exerted by the bolt 16. The interface material thus has to be softer than the material of the bolts used and is preferably elastic. For ease of handling the interface material may have the form of a sleeve surrounding the end of the bolt extending into the panel.

With the system described above, it is possible to attach granite panels easily and at far less cost while at the same time providing an improved resistance with regard to horizontal forces on the outer surfaces of buildings such as wind loads and horizontal loads caused by seismic movements.

The new system also features an increased flexibility especially in situations where the holes 24 are improperly shaped or do not precisely match with the openings 14 in the metal bracket 10. Due to its angled shape, each bolt 16, prior to tightening the nut 20, can easily be adjusted to the best fitting position without negative effects on its retaining capabilities. To this end, the openings 14 in the metal bracket 10 have a diameter which is substantially larger than the external diameter of the bolts 16.

## Claims

1. A cladding system comprising panels for attachment to a wall of a building and supporting structures (10) for securing to the wall, and further comprising a plurality of bolts (16) extending through openings (14) in the supporting structures, the bolts 16) having two linear portions, the one (18) at an angle to the other (22), the one end (18) of each bolt being fastened to the supporting structures (10) and the other end (22) thereof extending into a hole (24) in said panel,
**characterized** in that
- every hole (24) into which the other end (22) of a bolt (16) extends is perpendicular to the side of the panel (26) facing the wall, and in that
- every one end (18) of the bolts (16) is fastened to the supporting structures by means of a nut (20) and a wedge-shaped washer (28).

2. System as claimed in claim 1,
**characterized** in that
the other end (22) of each bolt (16) is roughened.

3. System as claimed in claim 1 or claim 2,
**characterized** in that
the angle between the two linear portions of each bolt (16) is in the range of 145° to 149°.

4. System as claimed in one of the preceding claims,
**characterized** in that
the linear portions of each bolt (16) are of unequal length.

5. System as claimed in one of the preceding claims,
**characterized** in that
the holes (24) into which the other end (22) of a bolt (16) extends have a depth of about 15 mm to 25 mm.

6. System as claimed in one of the preceding claims,
**charcterized** in that
the supporting structures are metal brackets (10) having an L-shaped cross section.

7. System as claimed in one of the preceding claims,
**characterized** in that
the wedge-shaped washers (28) have a V- or L-shaped cross section.

8. System as claimed in one of the preceding claims,
**characterized** in that
the openings (14) provided in the supporting structures have a diameter which is substantially larger than the external diameter of the bolts (16).

9. System as claimed in one of the preceding claims,
**characterized** in that
the other end (22) of each bolt (16) is surrounded by a sleeve made of a material softer than that of the bolt (16).

10. System as claimed in claim 9,
**characterized** in that
the sleeve is made of an elastic material.

## Patentansprüche

1. Fassadenverkleidungssystem mit Paneelen zum Anbringen an einer Gebäudewand und Stützstrukturen (10) zum Befestigen an der Wand, und mit einer Vielzahl von Schrauben (16), die sich durch Öffnungen (14) in den Stützstrukturen erstrecken, wobei die Schrauben (16) zwei gerade Abschnitte aufweisen, von denen der eine (18) im Winkel zu dem anderen (22) verläuft, und wobei das eine Ende (18) jeder Schraube an den Stützstrukturen (10) befestigt ist und ihr anderes Ende (22) sich in ein Loch (24) in dem Paneel erstreckt,
dadurch gekennzeichnet, daß
- jedes Loch (24), in das sich das andere Ende (22) einer Schraube (16) erstreckt, senkrecht zu der der Wand zugewandten Seite des Paneels verläuft; und
- jedes eine Ende (18) der Schrauben (16) mittels einer Mutter (20) und einem keilförmigen Unterlegring (28) an den Stützstrukturen befestigt ist.

2. System nach Anspruch 1,
dadurch gekennzeichnet, daß das andere Ende (22) jeder Schraube (16) aufgerauht ist.

3. System nach Anspruch 1 oder 2,
dadurch gekennzeichnet, daß der Winkel zwischen den beiden linearen Abschnitten jeder Schraube (16) im Bereich von 145° bis 149° liegt.

4. System nach einem der vorhergehenden Ansprüche,
dadurch gekennzeichnet, daß die geraden Abschnitte jeder Schraube (16) von ungleicher Länge sind.

5. System nach einem der vorhergehenden Ansprüche,
dadurch gekennzeichnet, daß die Löcher (24), in die sich das andere Ende (22) einer Schraube (16) erstreckt, eine Tiefe von ca. 15 mm bis 25 mm haben.

6. System nach einem der vorhergehenden Ansprüche,
dadurch gekennzeichnet, daß die Stützstrukturen Metallwinkel (10) mit L-förmigem Querschnitt sind.

7. System nach einem der vorhergehenden Ansprüche,
dadurch gekennzeichnet, daß die keilförmigen Unterlegringe (28) einen V- oder L-förmigen Querschnitt haben.

8. System nach einem der vorhergehenden Ansprüche,
dadurch gekennzeichnet, daß die in den Stützstrukturen vorgesehenen Öffnungen (14) einen Durchmesser haben, der deutlich größer als der Außendurchmesser der Schrauben (16) ist.

9. System nach einem der vorhergehenden Ansprüche,
dadurch gekennzeichnet, daß das andere Ende (22) jeder Schraube (16) von einer Hülse umgeben ist, die aus einem weicheren Material als das der Schraube (16) besteht.

10. System nach Anspruch 9,
dadurch gekennzeichnet, daß die Hülse aus einem elastischen Material besteht.

## Revendications

1. Système de bardage comprenant des panneaux destinés à être attachés à une paroi d'un bâtiment et des structures de support (10) à fixer à la paroi, et comprenant de plus une pluralité de boulons (16) s'étendant à travers des ouvertures (14) dans les structures de support, les boulons (16) possédant deux portions linéaires, l'une (18) faisant un angle avec l'autre (22), une extrémité (18) de chaque boulon étant fixée aux structures de support (10) et l'autre extrémité (22) de celui-ci s'étendant dans un trou (24) dudit panneau,
caractérisé en ce que
- chaque trou (24) dans lequel s'étend l'autre extrémité (22) d'un boulon (16) est perpendiculaire à la face du panneau (26) revêtant la paroi, et en ce que
- chaque une extrémité (18) des boulons (16) est fixée aux structures de support au moyen d'un écrou (20) et d'une rondelle en forme de coin (28).

2. Système selon la revendication 1,
caractérisé en ce que
l'autre extrémité (22) de chaque boulon (16) est rendue rugueuse.

3. Système selon la revendication 1 ou la revendication 2,
caractérisé en ce que
l'angle entre les deux portions linéaires de chaque boulon (16) se trouve dans la plage allant de 145° à 149°.

4. Système selon l'une quelconque des revendications précédentes,
caractérisé en ce que
les portions linéaires de chaque boulon (16) sont de longueur différente.

5. Système selon l'une quelconque des revendications précédentes,
caractérisé en ce que
les trous (24) dans lesquels s'étend l'autre extrémité (22) d'un boulon (16) ont une profondeur d'environ 15 mm à 25 mm.

6. Système selon l'une quelconque des revendications précédentes,
caractérisé en ce que
les structures de support sont des consoles en métal (10) présentant une coupe transversale en forme de L.

7. Système selon l'une quelconque des revendications précédentes,
caractérisé en ce que
les rondelles en forme de coin (28) ont une coupe transversale en forme de V ou de L.

8. Système selon l'une quelconque des revendications précédentes,
caractérisé en ce que
les ouvertures (14) présentes dans les structures de support ont un diamètre qui est sensiblement plus grand que le diamètre extérieur des boulons (16).

9. Système selon l'une quelconque des revendications précédentes,
caractérisé en ce que
l'autre extrémité (22) de chaque boulon (16) est entourée d'une gaine faite d'un matériau plus mou que celui du boulon (16).

10. Système selon la revendication 9,
caractérisé en ce que
la gaine est faite en un matériau élastique.
